# EUROPEAN PATENT APPLICATION

(11) **EP 4 362 165 A1**
(43) Date of publication of application: **01.05.2024**
(21) Application number: 23206313.1
(22) Date of filing: 27.10.2023
(51) Int. Cl.: H01M 10/24, H01M 10/26, H01M 10/28, H01M 4/48, H01M 4/32, H01M 4/34, H01M 4/36, H01M 4/50, H01M 4/52, H01M 4/62, H01M 50/414, H01M 50/417, H01M 50/429, H01M 50/449, H01M 50/474, H01M 50/486

(54) **IMPROVED ELECTROLYTIC CELL**

(30) Priority: 27.10.2022 IT 202200022191
(71) Applicant: Zinc System srls, 00071 Pomezia (RM) (IT)
(72) Inventor: Ranchella, Francesco, Pomezia (RM) (IT)
(74) Representative: IP Sextant s.r.l.

(57) **Abstract**

An improved electrolytic cell (1) comprising:
- a container body (2);
- an amount of alkaline electrolytic aqueous solution (3), contained in the container body (2) and free to occupy the container body (2);
- at least one negative electrode (4), comprising a first support (41) configured as a microperforated pocket and a first reactant material (42) supported by the first support (4), the at least one negative electrode (4) being arranged in the container body (2) at least partially immersed in the alkaline electrolytic aqueous solution (3) so that the first reactant material (42) comes into contact with the alkaline electrolytic aqueous solution (3);
- at least one positive electrode (5), comprising a second support (51) configured as a microperforated pocket and a second reagent material (52) supported by the second support (51), the at least one positive electrode (5) being arranged in the container body (2) at least partially immersed in the alkaline electrolytic aqueous solution (3) so that the second reagent material (52) contacts the alkaline electrolytic aqueous solution (3); and
- at least one polymeric membrane (6) interposed between the at least one negative electrode (4) and the at least one positive electrode (5), the at least one polymeric membrane also being at least partially immersed in the alkaline electrolytic aqueous solution (3);
wherein
the first reagent material (42) comprises one between Copper oxide or metallic Copper powder, and the second reactant material (52) comprises one material selected from Nickel hydroxide, Cobalt hydroxide, Silver oxide, Manganese dioxide or mixtures thereof, and the at least one polymeric membrane (6) is semi-permeable to OH⁻ and H⁺ ions.

## Description

The present invention relates to an improved electrolytic cell intended for use in steady-state applications, for power-storage in large power plants, in the photovoltaic field, as backup in industrial uninterruptible power supplies, and in the automotive field.

Electrolytic cells with an alkaline aqueous electrolyte solution and a negative electrode made of or coated with Copper have been tested since the early 1900s. Such cells proved to suffer from a number of drawbacks and therefore did not catch on in the market. The biggest drawback has proven to be the fact that Copper, although a material that can potentially be used for this type of application, tends to dissolve in the aqueous alkaline electrolyte solution and form Copper hydroxide, which, over time, short-circuits the electrodes of the electrolytic cell and thus causes them to break.

To overcome the problem of copper hydroxide formation, Edison had already suggested in US704306 the use of copper powder, with a very low grain size, to make the negative electrode of the electrolytic cell. However, this solution did not prove to be decisive, contributing only to slowing down the formation of copper hydroxide and slightly increasing the life of the cell itself. In fact, the electrolytic cell taught in US704306 was soon replaced by the better-performing Ni-Fe electrolytic cells, the iron being insoluble in the alkaline aqueous electrolyte solution, thus solving the aforementioned drawbacks.

In CN101027804, an alkaline cell is taught, comprising a positive electrode and a negative electrode that can comprise Copper oxide and are separated by a porous matrix saturated with an aqueous alkaline solution. The configuration of this alkaline cell does not allow the cell's life to be significantly prolonged, since the aqueous alkaline solution with which the porous matrix is saturated evaporates rapidly during use, thus compromising the cell's operation.

There is therefore a need to provide an improved electrolytic cell, using copper as a reagent material for the negative electrode, which solves the aforementioned drawbacks.

The main purpose therefore of the present invention is to provide an improved electrolytic cell which employs copper as a reactant material for the negative electrode and which has a longer life cycle, comparable to or longer than conventional electrolytic cells.

Another purpose of the present invention is to provide an improved electrolytic cell which is easy to make, which is inexpensive and which provides an energy density that is comparable to or greater than that of conventional cells, for example like Nickel-Cadmium or Lead cells.

Another purpose of the present invention is to provide an improved electrolytic cell that is also reliable and environmentally friendly.

It is a specific object of the invention an improved electrolytic cell comprising:
- a container body
- an amount of alkaline electrolytic aqueous solution, contained in the container body, which can freely occupy the container body;
- at least one negative electrode, comprising a first support and a first reactant material supported by said first support, said at least one negative electrode being arranged in the container body immersed at least partially in the alkaline electrolytic aqueous solution so that the first reactant material comes into contact with the alkaline electrolytic aqueous solution;
- at least one positive electrode, comprising a second support and a second reactant material supported by said second support, said at least one positive electrode being arranged in the container body immersed at least partially in the alkaline electrolytic aqueous solution so that the second reactant material comes into contact with the alkaline electrolytic aqueous solution; and
- at least one polymer membrane interposed between said at least one negative electrode and said at least one positive electrode;
wherein said first reactant material comprises a material selected from Copper oxide or metallic Copper powder and said second reactant material comprises a material selected from Nickel hydroxide, Cobalt hydroxide, Silver oxide, Manganese dioxide or mixtures thereof, and said at least one polymer membrane is semi-permeable to OH⁻ and H⁺ ions.

According to another aspect of the invention, the semi-permeable polymeric membrane can comprise or can consist of one or more layers of material of organic or synthetic origin, the material selected from a cellulose hydrate-based material, optionally cellophane a polyolefin-based material, optionally a microporous polyethylene-based material, or a microporous polypropylene-based material, or a microporous polytetrafluoroethylene-based material, or a sulphonated tetrafluoroethylene-based material, and is located at a maximum distance of less than or equal to 1 mm from the negative electrode.

According to a further aspect of the invention, the electrolytic cell can comprise at least one spacer element between said at least one polymeric membrane and said at least one positive electrode, optionally at a maximum distance therefrom of less than or equal to 1 mm, said at least one spacer element being able to comprise or being made of a plastic mesh, optionally porous plastic, and being able to be made of a material of choice selected from Polypropylene, Polyethylene, PVC or Teflon or combinations thereof.

According to an additional aspect of the invention, the alkaline electrolyte aqueous solution can be a mixture comprising:
- distilled water in a percentage weight amount between 92% and 60% of the total weight of the alkaline electrolytic aqueous solution; and
- Potassium hydroxide or sodium hydroxide, or mixtures thereof, in a percentage weight amount between 8% and 40% of the total weight of the alkaline electrolytic aqueous solution,
wherein said percentage weight amounts can vary in said percentage ranges so that their sum is always 100%.

According to another aspect of the invention, the alkaline electrolytic aqueous solution can comprise:
- distilled water in a percentage weight amount comprised between 99% and 93% of the total weight of the alkaline electrolytic aqueous solution; and
- Lithium hydroxide in a complementary total percentage weight amount comprised between 1% and 7% of the total weight of the alkaline electrolytic aqueous solution,
wherein the aforementioned percentage weight amounts can vary in the aforementioned percentage ranges so that their sum is always 100%.

According to a further aspect of the invention, the alkaline electrolytic aqueous solution can comprise:
- distilled water in a percentage weight amount comprised between 91% and 53% of the total weight of the alkaline electrolytic aqueous solution; and
- a mixture of potassium hydroxide and/or sodium hydroxide, and lithium hydroxide, in a complementary total percentage weight amount comprised between 9% and 47% of the total weight of the alkaline electrolytic aqueous solution,
wherein the aforementioned percentage weight amounts can vary in the aforementioned percentage ranges such that their sum equals 100%.

According to an additional aspect of the invention, the alkaline electrolytic aqueous solution can also comprise a percentage weight amount of sodium tetraborate or potassium tetraborate less than 5%, optionally between 0. 1% to 4%, more optionally between 2% and 3% of the total weight of the alkaline electrolytic aqueous solution, the other components of the alkaline electrolytic aqueous solution being comprised in said percentage weight amounts, whereby the sum of all components of the alkaline electrolytic aqueous solution is 100%.

According to another aspect of the invention, the copper oxide of the first reactant material can comprise black copper oxide CuO and/or red copper oxide Cu₂O.

According to a further aspect of the invention, the second reactant material can comprise a percentage weight amount of thickeners between 0.1% and 20% of the total weight of the second reactant material, the thickeners being selected from the group comprising Polyvinylacetate, Polytetrafluoroethylene or Epoxy Resin or combinations thereof.

According to an additional aspect of the invention, the second reactant material can comprise Metallic Nickel or Metallic Cobalt or Calcium Hydroxide or mixtures thereof, in a percentage weight amount lower than 5%, optionally equal to 3% of the total weight of the second reactant material, the other components of the second reactant material being comprised in said complementary percentage weight amounts, whereby the sum of all components of the second reactant material is 100%.

According to another aspect of the invention, the second reactant material can comprise an amount of Carbon Black or Graphite or Graphene in a percentage weight comprised between 8% and 60% of the total weight of the second reactant material, the other components of the second reactant material being comprised in said percentage weight amount, so that the sum of all components of the second reactant material is 100%.

According to a further aspect of the invention, the second reactant material can comprise a mixture of Carbon Black and/or Graphite and/or Graphene, wherein the percentage weight of each one between Carbon Black and/or the Graphite and/or the Graphene in the mixture is between 5% and 95% of the total weight of their mixture, the other components of the second reactant material being comprised in said percentage weight amounts such that the sum of all components of the second reactant material is 100%.

According to an additional aspect of the invention, the cell can comprise in the first reactant material and/or in the second reactant material and/or or in the alkaline electrolyte aqueous solution a total percentage weight amount of Zinc oxide and/or Zinc hydroxide and/or metallic Zinc powder, less than or equal to 5%, optionally between 0.1% to 4%, more optionally equal to 3% of the total weight respectively of the first reactant material and/or the second reactant material and/or the alkaline electrolyte aqueous solution, the other components respectively of the first reactant material and/or the second reactant material and/or or the alkaline electrolyte aqueous solution being included in percentage weight amounts such that the sum of all components is 100%.

It is also an object of the present invention a battery comprising a plurality of improved electrolytic cells as above, connected in series with each other.

The advantages offered by an improved electrolytic cell according to the present invention are apparent.

Indeed, the improved electrolytic cell according to the invention has an overall simple configuration, is made of materials which are commercially available at low cost, are easy to use in the manufacturing of the cell and have excellent electrical conductivity. Not only that, the improved electrolytic cell according to the invention is reliable as experimental tests have shown that it guarantees more than 6000 charge-discharge cycles. The improved electrolytic cell of the present invention is also environmentally friendly as it is 100% recyclable.

The present invention will now be described, by way of illustration but not limitation, according to its preferred embodiment, with particular reference to the appended figures, wherein:
Figure 1 schematically illustrates a side view in transparency of a preferred embodiment of the electrolytic cell according to the present invention,
Figure 2 is a transparency side view schematic representation of another preferred embodiment of the electrolytic cell; and
Figure 3 schematically shows a side view in transparency of a battery comprising a plurality of electrolytic cells according to the present invention.

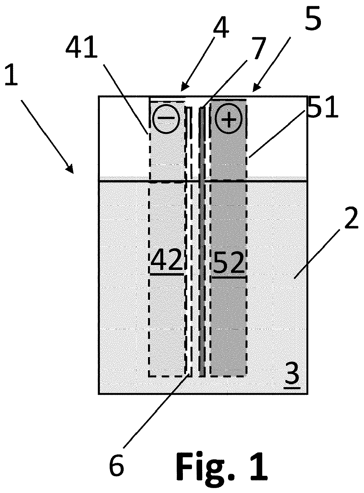

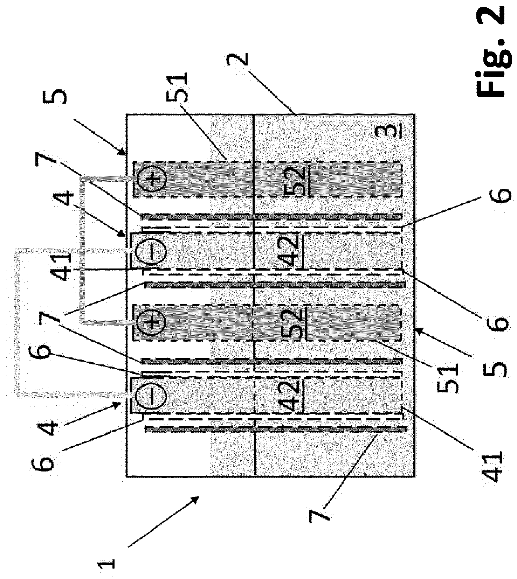

With particular reference to the appended Figures 1 and 2, it can be seen that an improved electrolytic cell according to the present invention is generally referred to by reference number 1 and comprises:
- a container body 2;
- an amount of alkaline electrolytic aqueous solution 3, contained in the container body 2 and free to occupy the container body;
- at least one negative electrode 4, comprising a first support 41 configured as a microperforated pocket and a first reagent material 42 supported by said first support 41, the negative electrode 4 being disposed in the container body 2 immersed at least partially in the alkaline electrolyte aqueous solution 3 so that the first reagent material 42 comes into contact with the alkaline electrolyte aqueous solution 3; and
- at least one positive electrode 5, comprising a second support 51 configured as a microperforated pocket and a second reagent material 52 supported by said second support 51, the positive electrode 5 being arranged in the container body 2 and immersed at least partially in the alkaline electrolytic aqueous solution 3 so that the second reagent material 52 comes into contact with the alkaline electrolytic aqueous solution 3.

According to an advantageous aspect of the invention, the improved electrolytic cell 1 further comprises at least one polymer membrane 6 housed in the container body 2 between a respective negative electrode 4 and a respective positive electrode 5, which is also at least partially immersed in the alkaline electrolytic aqueous solution 3.

According to a particularly advantageous aspect of the invention, the first reagent material 42, supported in a manner known to the skilled person by the first support 41, for example contained in a pass-through housing delimited by the first support 41 or applied to its outer surface, comprises Copper oxide, for example Black Copper oxide (CuO) and/or Red Copper oxide (Cu2O), or metallic Copper powder, the second reagent material 52, also supported in a manner known to the skilled person by the second support 51, for example contained in a pass-through housing delimited by the second support 51 or applied to its outer surface, comprises a material selected from the group including Nickel hydroxide, Cobalt hydroxide, Silver oxide, Manganese dioxide or mixtures thereof.

The polymeric membrane 6 has dimensions substantially corresponding to those of the first support 41 of the respective negative electrode 4 and is advantageously housed in the container body 2 facing the respective positive electrode 5, at a maximum distance of less than or equal to 1 mm from the respective first support 41, optionally being placed in contact therewith.

The polymeric membrane 6 is semi-permeable and comprises or consists of a one- or multi-layered film made of a material of organic or synthetic origin, selected from: a cellulose hydrate-based material, for example cellophane, a polyolefin-based material, for example a microporous polyethylene-based material, or a microporous polypropylene-based material such as Celgard, marketed by the US company Celgard LLC, or a microporous polytetrafluoroethylene-based material such as Gore-Tex, produced and marketed for example by the company W. L. Gore & Associates, or a sulphonated tetrafluoroethylene-based material, for example marketed under the trade name Nation^{™} by the US company The Chemours Company.

According to a particularly preferred variant of the invention, the semi-permeable polymeric membrane 6 is a transparent cellophane film which, as is well known, is a very inexpensive material produced by reaction of viscose with sulphuric acid. However, the person skilled in the art will have no difficulty in understanding how the semi-permeable polymeric 6-membrane can be a film comprising, for example, but not limited to, a cellophane layer superimposed on a Celgard or Nation^{™} layer.

The resulting film has impermeable properties against liquids, but allows gases, vapours and ions to pass through. More specifically, the membrane 6 of the improved electrolytic cell 1 of the present invention has a thickness of between 0.01 and 0.3 mm, preferably comprised between 0.01 and 0.1 mm, and advantageously retains the molecules of the first reagent material 42 as well as the Copper hydroxide inevitably generated by the contact between the first reagent material 42 and the aqueous alkaline electrolyte solution 3, preventing the latter from leaking to the bottom of the container body 2 and reaching over time the positive electrode 5, thereby short-circuiting the cell 1. On the other hand, the semi-permeable polymeric membrane 6 of the improved electrolytic cell 1 of the present invention allows OH⁻ and H⁺ ions resulting from the chemical reactions occurring between the aqueous alkaline electrolyte solution 3, the first reactant material 42 and the second reactant material 52 to pass through.

According to another particularly advantageous aspect of the invention, the electrolytic cell 1 can also comprise at least one spacer element 7, interposed between a respective polymeric membrane 6 and the second support 51 of a respective positive electrode 5, also the spacer element 7 being immersed at least partially in the alkaline aqueous electrolyte solution 3, so as to distance the respective polymeric membrane 6 and the respective positive electrode 5 from each other. Said spacer element 7 has dimensions substantially corresponding to those of the respective polymeric membrane 6 and advantageously comprises or consists of a plastic mesh, optionally porous, the meshes of which delimit through openings of a maximum size of between 1 mm and 10 mm, in case of a non-porous plastic mesh, or of a maximum size of between 0.01 mm and 0.1 mm, in case of a porous plastic mesh.

Spacer element 7 is advantageously made of a material selected among Polypropylene, Polyethylene, PVC or Teflon or combinations thereof. The spacer element 7 is between 0.5 mm and 3 mm thick, according to the distance between the respective polymer membrane 6 and the respective positive electrode 5.

The use of such a spacer element 7 is particularly advantageous. In fact, the applicant found out that by inserting the spacer element 7 between the semi-permeable polymeric membrane 6 and the positive electrode 5, the polymeric membrane 6, which is in any case degraded by contact with the oxygen produced by the positive electrode 5, deteriorates more slowly if it comprises or is composed of cellophane. Furthermore, the spacer element 7 interposed between the semi-permeable polymeric membrane 6 and the positive electrode 5 simplifies the assembly process of the improved electrolytic cell 1, because the positive electrodes 5 and negative electrodes 4 of a cell can be "sandwich" assembled without the aid of any other element keeping them at a distance, as for example schematically represented in Figures 1 and 2. Figure 2 shows a cell with two negative electrodes 4 and two positive electrodes 5, respectively, connected in parallel with each other. In this case, the nominal voltage of this cell is the same as that of the cell shown in Figure 1, but the storage capacity is double.

As an alternative to the "sandwich" assembly described above, according to a variant of the present invention and as already indicated above for each negative electrode 4 and the respective polymeric membrane 6, between the various components of the electrolytic cell and specifically also between each polymeric membrane 6 and the respective spacer element 7 and between each spacer element 7 and the respective positive electrode 5, a maximum distance, less than or equal to 1 mm, can be maintained, having been verified that the performance of the improved electrolytic cell 1 of the present invention is still comparable to or better than that of the conventional electrolytic cells mentioned above, even if the various components are not assembled in a "sandwich" manner.

It has been verified that the efficiency of an electrolytic cell, changes not so much as a function of the distance of the polymer membrane 6 with respect to the respective positive electrodes 5 or negative electrodes 4, but rather as a function of the distance of said electrodes from each other. The closer they are to each other, the lower the internal resistance of the electrolytic cell 1, hence the greater its efficiency.

The alkaline electrolytic aqueous solution 3 of the electrolytic cell 1 of the present invention comprises, according to a preferred embodiment:
- Distilled water in a percentage weight amount comprised between 92% and 60% of the total weight of the alkaline aqueous electrolyte solution 3; and
- Potassium hydroxide (KOH) or Sodium hydroxide (NaOH) or mixtures thereof, in a complementary percentage weight amount comprised between 8% and 40% of the total weight of the alkaline aqueous electrolyte solution 3.

Clearly, the weight percentages of the components of the alkaline electrolytic aqueous solution 3 indicated above, as well as the weight percentages which will be given later in this description with reference to other components of the cell 1, can vary in the above percentage ranges so that their sum is always equal to 100%.

According to a preferred alternative embodiment of the present invention, the alkaline aqueous electrolyte solution 3 of the cell 1 of the present invention comprises:
- distilled water in a percentage weight amount comprised between 99% and 93% of the total weight of the alkaline electrolytic aqueous solution 3; and
- Lithium hydroxide (LiOH), in a complementary total percentage weight amount comprised between 1% and 7% of the total weight of the alkaline electrolytic aqueous solution 3,
wherein, as mentioned above, the above-mentioned percentage weight amounts can vary in the above-mentioned percentage ranges such that their sum is always equal to 100%.

According to a further preferred embodiment of the present invention, the alkaline aqueous electrolyte solution 3 of cell 1 of the present invention is a mixture comprising:
- distilled water in a percentage weight amount comprised between 91% and 53% of the total weight of the alkaline electrolytic aqueous solution 3; and
- a mixture of potassium hydroxide (KOH) and/or sodium hydroxide (NaOH), and lithium hydroxide (LiOH), in a complementary total percentage weight amount comprised between 9% and 47% of the total weight of the alkaline aqueous electrolyte solution 3,
wherein the above-mentioned percentage weight amounts can vary in the above-mentioned percentage ranges so that their sum equals 100%.

The Lithium hydroxide has the advantageous function of stabilising the Copper of the first reactant material 42.

According to a further preferred variant of the invention, the alkaline electrolyte aqueous solution 3 in each one of the three embodiment forms described above can also comprise a percentage weight amount of sodium tetraborate (Na₂B₄O₇) or potassium tetraborate (K₂B₄O₇) of less than 5%, optionally between 0.1% to 4%, more optionally between 2% and 3% of the total weight of the alkaline electrolytic aqueous solution 3, the other components of the alkaline electrolytic aqueous solution 3 being comprised in the above-mentioned percentage weight amounts, so that the sum of all the components of the alkaline electrolytic aqueous solution 3 is 100%.

Sodium tetraborate (Na₂B₄O₇) or potassium tetraborate (K₂B₄O₇) act as stabilisers of the semi-permeable polymeric membrane 6 of organic origin, preventing or retarding its deterioration.

Two illustrative and non-limiting examples of an alkaline aqueous electrolyte solution 3, advantageously employable in the electrolytic cell 1 according to the present invention, are obtained from:
- 250g KOH + 30g LiOH + 20g Na₂B₄O₇ + 700ml H₂O; and
- 125g KOH + 125g NaOH + 30g LiOH + 20g Na₂B₄O₇ + 700ml H₂O.

In the improved electrolytic cell 1 according to the present invention, the second reactant material 52 of the positive electrode 5 comprises a percentage weight amount of thickeners between 0.1% and 20% of the total weight of the second reactant material 52, and the remaining part, as mentioned above, comprises a material selected from the group consisting of Nickel hydroxide, Cobalt hydroxide, Silver oxide, Manganese dioxide or combinations thereof. The thickeners are selected from the group comprising Polyvinylacetate, Polytetrafluoroethylene or Epoxy resin or combinations thereof, depending on the other components of the second reactant material 52.

According to a preferred variant of the present invention, the second reagent material 52 further comprising metallic Nickel or metallic Cobalt or Calcium Hydroxide or mixtures thereof, in an amount in percentage weight lower than 5%, optionally equal to 3% of the total weight of the second reagent material 52, the other components of the second reagent material 52 being clearly included in the aforementioned percentage weight amounts, so that the sum of all components of the second reagent material 52 is equal to 100%. Metallic Nickel, metallic Cobalt and Calcium hydroxide increase the conductivity of the positive electrode 5 and/or stabilise its capacity.

According to a further preferred variant of the present invention, the second reagent material 52 also comprises an amount of Carbon Black or Graphite or Graphene between 8% and 60% of the total weight of the second reagent material 52, the other components of the second reagent material 52 being included in the aforementioned amounts, whereby the sum of all components of the second reagent material 52 is 100%.

Carbon Black, Graphite and Graphene can also be mixed together, in a total amount comprised between 8% and 60% of the total weight of the second reactant material 52.

The function of Carbon Black and/or Graphite and/or Graphene is to make the second reagent material 52 of the positive electrode 5 more conductive. By way of non-limiting example, the second reagent material 52 of the positive electrode 5 can comprise, in a percentage weight: 20% Carbon Black, 20% Graphite, 20% Graphene and 40% Nickel Hydroxide for a total of 100%. Or, again by way of example, the second reagent material 52 can comprise 10% Carbon Black, 20% Graphite, 5% Graphene and 65% Nickel Hydroxide, or again, according to a further variation, it can comprise 3% Carbon Black, 3% Graphite, 3% Graphene, and 91% Nickel Hydroxide. It should also be noted that Carbon Black and/or Graphite and/or Graphene, can also be used in the first reactant material 42 with the same percentages as indicated above for the second reactant material 52 and the same effects.

According to a further particularly advantageous aspect of the invention, the improved electrolytic cell 1 according to the present invention can comprise in the first reactant material 42 and/or in the second reactant material 52 and/or or in the aqueous alkaline electrolytic solution 3 an overall percentage weight amount of Zinc oxide and/or Zinc hydroxide and/or metallic Zinc powder, not exceeding 5%, optionally between 0.1% and 4%, more optionally equal to 3% of the total weight respectively of the first reactant material 42 and/or the second reactant material 52 and/or or the alkaline electrolyte aqueous solution 3, the other components of the first reactant material 42 and/or the second reactant material 52 and/or or the alkaline electrolyte aqueous solution 3 being included as appropriate in the above-mentioned percentage weight amounts, wherein the sum of all respective components is 100%. For example, according to a further non-limiting example, the second reagent material 52 of the positive electrode 5 can comprise, in percentage weight: 10% Graphite, 5% Carbon Black, 5% metallic Nickel powder, 3% Cobalt hydroxide, 3% Zinc hydroxide, 3% Calcium hydroxide, 70% Nickel hydroxide, 1% thickeners.

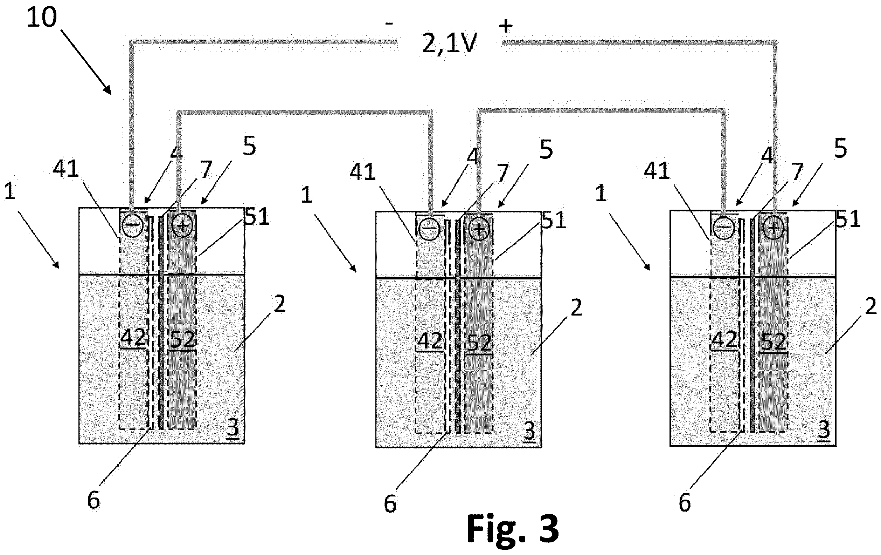

It should be noted that although the improved electrolytic cell 1 of the present invention achieves the purposes outlined in the introduction even without the addition of Zinc oxide and/or Zinc hydroxide and/or metallic Zinc powder in the first reactant material 42 and/or in the second reactant material 52 and/or or in the alkaline aqueous electrolyte solution 3, such addition nevertheless contributes to further improving the performance of the cell. In fact, it was found that in order to obtain a full charge in electrolytic cells of the conventional type, having a negative copper oxide electrode, such as those described in US704306, it is necessaryto apply a higher-than-normal peakvoltage. Forexample, it was found that a voltage peak of about 1.5V must be applied at the end of the charge to a conventional electrolytic cell capable of delivering 0.7V, in order to complete the charging process itself. This voltage surplus, however, is not returned during the discharge phase of the cell, whose voltage drops almost immediately to about 0.8V. And yet, if this final voltage peak is not applied to the electrolytic cell during charging, the cell is unable to deliver 100% of its capacity. The voltage peak to be applied to the electrolytic cell during the charging phase, while not risking damaging the cell, obviously results in a waste of energy and a drop in the cell's efficiency. Well, in order not to waste energy during the charging phase, the applicant found out that it is possible to add to the first reagent material 42 of the negative electrode 4, in the aqueous alkaline electrolyte solution 3 or even in the second reagent material 52 of the positive electrode 5, the above-mentioned amounts of zinc oxide and/or zinc hydroxide and/or metallic Zinc powder. This metal, having a more negative potential than Copper, is reduced to metal precisely during the final reduction phase of the first reactant material 42 and thus reduces the voltage increase required at the end of the charge by the improved electrolytic cell 1 and, likewise, reduces the drop in the voltage supplied by the same, in its first discharge phases, thus returning almost in full the amount of energy supplied during the peak charge voltage. This results not only in an increase in the efficiency of the improved cell 1 of the present invention, but also in an increase in the nominal voltage of the cell 1 itself, thereby increasing the energy density and thus making it possible to realise a battery 10 (see Figure 3) comprising a plurality of cells 1 according to the present invention, the number of which, with equal performance, will be lower than the required number of cells with a negative copper electrode of a conventional type.

The electrodes of the improved electrolytic cell 1 according to the present invention can be made in a simple and inexpensive way.

Thus, for example, according to a preferred form of the invention, all of the oxides or hydroxides, constituting the second reactant material 52 of the positive electrode 5, can be mixed in powder form or co-precipitated through chemical reaction from the respective salts. Co-precipitation was found to provide better results in terms of conductivity and better capacitance in Ah/kg of the second reactant material, as it allows for better doping.

If, for example, the positive electrode 5 comprises mainly Nickel hydroxide and Cobalt and Zinc and Calcium are atomically bonded to the Nickel hydroxide molecule, the Nickel hydroxide can achieve a capacity of more than 250 Ah/kg, compared to a theoretical maximum of about 290 Ah/kg.

The salts for performing the aforementioned co-precipitation, i.e. the respective nitrates, chlorides, sulphates, acetates, fluorides, taken individually or in combination, can generally be derived from most existing acids.

As a purely illustrative and non-limiting example, in the following there is described how a second reagent material 52 can be obtained for a positive electrode 5 by preparing the following mixture of salts:

70g NiCl₂ + 3g CoCl₂ + 3g ZnCl₂ + 3g CaCl₂ + 300ml H₂O,

and pouring it with spray nozzles into a hot, concentrated solution of alkalis dissolved in distilled water, the alkalis having been selected from the group comprising Sodium Hydroxide (NaOH), Potassium Hydroxide (KOH), Lithium Hydroxide (LiOH) and mixtures thereof, the total amount of which is greater than or less than 300 ml, the alkali solution having a temperature range of 20°C to 80 °C and a concentration between 7% and 50% by weight of the distilled water in the solution.

It should be noted that the temperature range between 20°C and 80°C allows obtaining a smaller particle size of Ni(OH)₂ than lower temperatures. Since the mass therefore has a larger exposed surface area (due to the smaller particle size), it follows that the capacity per gram will be increased.

It should also be noted that the amount of distilled water is irrelevant, what matters is the number of moles of the mixture of salts and the alkali, and thus the stoichiometric ratio, where to ensure the complete reaction of the salts, the alkali must always be at least 10% greater in percentage weight. For ease of execution, one tends to use not too much distilled water anyway, as this will then have to be evaporated. An example of a reaction process involves, for example, about 79g of salt mixture in 300 ml of distilled water and 54g of NaOH in another 300ml of distilled water. Pouring the salts solution into the NaOH solution results in the co-precipitation of elements, which will basically be doped Ni(OH)₂ (Nickel Hydroxide), and NaCl (Sodium Chloride) in solution. At this point, washing and drying is performed.

Once the mixture of salts is poured into the alkali solution, due to the chemical reactions between the respective components, a precipitate is formed consisting of Nickel Hydroxide doped with Cobalt, Zinc and Calcium and any excess dopants precipitated in the form of Cobalt Hydroxide, Zinc Hydroxide and Calcium Hydroxide. Washes of the precipitate are then carried out (optionally in a number between 3 and 10) to remove the by-products of the above chemical reactions. In the specific case of the example above, having used Sodium Hydroxide as an alkali, the by-products included Sodium Chloride (NaCl), i.e. simple table salt. The precipitate (insoluble in water) was then dried and ground, the precipitate was then mixed with Graphite, metal Nickel powder and thickeners as described above, resulting in the second reagent material 52.

This mixture of elements, constituting the second reagent material 52 is simple and inexpensive to produce and can be introduced into an electrode having a pocket-configured support 51, comprising, for example, two nickel-plated iron foils of a thickness of about 0.1 mm, which are microperforated with a hole density between 100 and 600 holes/cm², resulting superficially rough. A desired amount of the second reagent material 52 can thus be accommodated in such a pocketed support 51 and a pressure between 100 and 400 kg/cm² can then be applied to the two nickel-plated iron sheets to stabilise the support 51 with its contents. Each pocket support 51 thus filled with reagent material 52 and then pressed can be assembled together with other pocket supports 51 of the same type to form an electrode 5 of any shape and size. The positive electrode holder can be made not only of nickel-plated Iron but also of a material selected from Copper, soft Iron, nickel-plated Iron, Silver, Gold, Platinum, Titanium, or made of Iron and coated with Copper, Silver, Gold or Platinum Titanium.

An entirely similar production procedure, mutatis mutandis, can be followed for the production of the negative electrode 4, also configured as a microperforated pocket. For example, the negative electrode can consist of two microperforated foils made of a material of choice selected from Copper, soft Iron, nickel-plated Iron, Silver, Gold, Platinum, Titanium, or made of Iron and coated with Copper, Silver, Gold or Platinum Titanium.

The improved electrolytic cell 1 according to the invention can be used to make batteries of various configurations. Figure 3, for example, shows a battery comprising three electrolytic cells according to the invention, connected in series with each other. The resulting battery is capable of generating three times the voltage while maintaining a constant storage capacity of, for example, 100 Ah.

It is apparent that the improved electrolytic cell 1 according to the invention solves the drawbacks set out in the introduction and meets the goals therein indicated. In fact, thanks to the use of the polymer membrane 6, which is semi-permeable to the OH⁻ and H⁺ ions released by the chemical reactions inside the cell, the use of Copper in the negative electrode is allowed and short-circuits of the cell itself due to the copper hydroxide produced are avoided. The life cycle of the electrolytic cell 1 according to the invention is high, being equal to about 6000 charge-discharge cycles.

Not only that, the cell whose electrodes 4 and 5 are made as described above is easy to manufacture. The negative electrode 4, for example, according to a variant of the present invention employs black copper oxide, which is an easy to obtain, low-cost material as well as an excellent natural semiconductor which, therefore, can be used as such for the production of the electrode and does not require any special or complex doping. The cellophane membrane 6 is also inexpensive, as is the spacer element 7. The alkaline aqueous electrolyte solution 3 keeps the membrane and electrodes stable by delaying or preventing their deterioration, and this makes the cell of the invention highly reliable. Last but not least, the materials with which the cell 1 of the invention is made are 100% recyclable.

In the foregoing, preferred embodiments and suggested variations of the present invention have been described, but it is to be understood that those skilled in the art can make modifications and changes without thereby departing from the relevant scope of protection as defined by the appended claims.

## Claims

1. An improved electrolytic cell (1) comprising:
- a container body (2);
- an amount of alkaline electrolytic aqueous solution (3), contained in the container body (2) and free to occupy the container body (2);
- at least one negative electrode (4), comprising a first support (41) configured as a microperforated pocket and a first reactant material (42) supported by said first support (4), said at least one negative electrode (4) being arranged in the container body (2) at least partially immersed in the alkaline electrolytic aqueous solution (3) so that the first reactant material (42) comes into contact with the alkaline electrolytic aqueous solution (3);
- at least one positive electrode (5), comprising a second support (51) configured as a microperforated pocket and a second reagent material (52) supported by said second support (51), said at least one positive electrode (5) being arranged in the container body (2) at least partially immersed in the alkaline electrolytic aqueous solution (3) so that the second reagent material (52) contacts the alkaline electrolytic aqueous solution (3); and
- at least one polymeric membrane (6) interposed between said at least one negative electrode (4) and said at least one positive electrode (5), said at least one polymeric membrane also being at least partially immersed in the alkaline electrolytic aqueous solution (3);
wherein
said first reagent material (42) comprises one between Copper oxide or metallic Copper powder, and
said second reactant material (52) comprises one material selected from Nickel hydroxide, Cobalt hydroxide, Silver oxide, Manganese dioxide or mixtures thereof, and
said at least one polymeric membrane (6) is semi-permeable to OH⁻ and H⁺ ions.

2. Cell (1) according to claim 1, wherein the semi-permeable polymeric membrane (6) comprises or consists of a one- or multi-layered film of a material having organic or synthetic origin, the material selected from a cellulose hydrate-based material, optionally cellophane, a polyolefin-based material optionally a microporous polyethylene-based material, or a microporous polypropylene-based material, or a microporous polytetrafluoroethylene-based material, or a sulphonated tetrafluoroethylene-based material, and is arranged at a maximum distance of 1 mm or less from the negative electrode (4).

3. Cell (1) according to claim 1 or 2, comprising at least one spacer element (7) between said at least one polymeric membrane (6) and said at least one positive electrode (5), optionally at a maximum distance therefrom lower than or equal to 1 mm, said at least one spacer element (7) comprising or being made of a plastic mesh, optionally porous plastic, and being made of a material of choice from Polypropylene, Polyethylene, PVC or Teflon or combinations thereof.

4. Cell (1) according to any previous claim, wherein the alkaline electrolyte aqueous solution (3) comprises:
- Distilled water in a percentage weight amount comprised between 92% and 60% of the total weight of the alkaline electrolytic aqueous solution (3); and
- Potassium hydroxide or sodium hydroxide or mixtures thereof, in a percentage weight amount comprised between 8% and 40% of the total weight of the alkaline electrolytic aqueous solution (3)
wherein the above percentage weight amounts can vary in the above percentage ranges, so that their sum is always equal to 100%.

5. Cell (1) according to any claim 1 to 3, wherein the alkaline electrolytic aqueous solution (3) comprises:
- distilled water in a percentage weight amount comprised between 99% and 93% of the total weight of the alkaline electrolytic aqueous solution (3); and
- Lithium hydroxide in an additional total percentage weight amount comprised between 1% and 7% of the total weight of the alkaline electrolytic aqueous solution (3),
wherein the above-mentioned percentage weight amounts can vary in the above-mentioned percentage ranges so that their sum is always equal to 100%.

6. Cell (1) according to any claim 1 to 3, wherein the alkaline electrolyte aqueous solution (3) comprises:
- distilled water in a percentage weight amount between 91% and 53% of the total weight of the alkaline electrolytic aqueous solution (3); and
- a mixture of potassium hydroxide and/or sodium hydroxide, and lithium hydroxide, in a complementary total percentage weight amount between 9% and 47% of the total weight of the alkaline electrolyte,
wherein the aforesaid percentage weight amounts can vary in the aforesaid percentage ranges so that their sum equals 100%.

7. Cell (1) according to any claim 4 to 6, wherein the alkaline electrolyte aqueous solution (3) further comprises a percentage weight amount of sodium tetraborate or potassium tetraborate lowerthan 5%, optionally between 0.1% and 4%, more optionally between 2% and 3% of the total weight of the alkaline electrolytic aqueous solution (3), the other components of the alkaline electrolytic aqueous solution (3) being comprised in said percentage weight amounts, whereby the sum of all the components of the alkaline electrolytic aqueous solution (3) is 100%.

8. Cell (1) according to any previous claim, wherein the Copper oxide of the first reactant material (42) comprises black Copper oxide CuO and/or red Copper oxide CuzO.

9. Cell (1) according to any previous claim, wherein the second reactant material (52) comprises a percentage weight amount of thickeners between 0.1% and 20% of the total weight of the second reactant material (52), the thickeners being selected from the group comprising Polyvinylacetate, Polytetrafluoroethylene or Epoxy Resin or combinations thereof.

10. Cell (1) according to any previous claims, wherein the second reactant material (52) comprises Metallic Nickel or Metallic Cobalt or Calcium Hydroxide or mixtures thereof, in a percentage weight amount lower than 5%, optionally equal to 3% of the total weight of the second reactant material (52), the other components of the second reactant material (52) being included in said complementary percentage weight amounts, whereby the sum of all components of the second reactant material (52) is equal to 100%.

11. Cell (1) according to any preceding claim, wherein the second reactant material (52) comprises an amount of Carbon Black or Graphite or Graphene in a percentage weight comprised between 8% and 60% of the total weight of the second reactant material (52), the other components of the second reactant material (52) being included in said percentage weight amounts, wherein the sum of all components of the second reactant material (52) is equal to 100%.

12. Cell (1) according to any previous claim, wherein the second reactant material (52) comprises a mixture of Carbon Black and/or Graphite and/or Graphene, wherein the percentage weight amount of each one between Carbon Black and/or the Graphite and/or the Graphene in the mixture is between 5% and 95% of the total weight of their mixture, the other components of the second reactant material (52) being included in said percentage weight amounts such that the sum of all components of the second reactant material (52) is equal to 100%.

13. Cell (1) according to any previous claim, comprising in the first reactant material (42) and/or in the second reactant material (52) and/or or in the alkaline electrolytic aqueous solution (3) a total percentage weight amount of Zinc oxide and/or Zinc hydroxide and/or metallic Zinc powder, lower than or equal to 5%, optionally between 0.1% to 4%, more optionally equal to 3% of the total weight of the first reactant material (42) and/or the second reactant material (52) and/or the alkaline electrolyte aqueous solution (3) respectively, the other components of the first reactant material (42) and/or the second reactant material (52) and/or or the alkaline electrolyte aqueous solution (3) being included in percentage weight amounts such that the sum of all components is 100%.

14. Battery (10) comprising a plurality of improved electrolytic cells (1) according to any previous claim, connected in series with each other.
